# EUROPÄISCHE PATENTSCHRIFT

(11) **EP 1 939 055 B1**
(45) Veröffentlichungstag und Bekanntmachung des Hinweises auf die Patenterteilung: **19.10.2011**
(21) Anmeldenummer: 07119767.7
(22) Anmeldetag: 31.10.2007
(51) Int. Cl.: B60S 1/04

(54) **Scheibenwischvorrichtung**
Windscreen wiper device
Dispositif d'essuie-glace

(30) Priorität: 28.12.2006 DE 102006061677
(43) Veröffentlichungstag der Anmeldung: 02.07.2008
(73) Patentinhaber: ROBERT BOSCH GMBH, 70442 Stuttgart (DE)
(72) Erfinder: Hawighorst, Achim, 77830, Buehlertal (DE); Benner, Andreas, 77830, Buehlertal (DE)

(56) Entgegenhaltungen:
- EP-A2- 1 055 571
- DE-A1- 10 257 552
- US-A1- 2004 091 305
- US-B1- 6 343 403

## Beschreibung

### STAND DER TECHNIK

Die Erfindung betrifft eine Scheibenwischvorrichtung, insbesondere für ein Kraftfahrzeug, mit einem an einem Wischerantrieb angebundenen Platinenrohr.

Bisher werden für gattungsgemäße Scheibenwischvorrichtungen eine Gussplatine oder ein Platinenrohr verwendet. Das Platinenrohr ist zwischen einem Getriebegehäuse und einem Motorhalter geklemmt oder an den Motorhalter angeschweißt. Mit dem Motorhalter ist das wischergestänge, also das Platinenrohr und mindestens ein Wischerlager, an einer Karosserie befestigt. Diese Anordnungen weisen jedoch zu viele Bauteile und eine zu hohe Teilekomplexität auf, woraus hohe Fertigungs- und Montagekosten resultieren. Außerdem ist ein Toleranzausgleich bei der Positionierung des Wischergestänges während der Montage der Scheibenwischvorrichtung nicht oder nur sehr schlecht möglich.

Aus der US 2004/091305 A1 ist ein Wischantrieb bekannt, der an einem Platinenrohr angebunden ist, wobei an dem Wischerantrieb ein Stift zur Befestigung an einer Fahrzeugkarosserie vorgesehen ist.

### OFFENBARUNG DER ERFINDUNG

Die Erfindung hat die Aufgabe, eine Scheibenwischvorrichtung der eingangs genannten Art dahingehend zu verbessern, dass die Teilevielzahl reduziert wird.

Die Erfindung löst die gestellte Aufgabe mit einer Scheibenwischvorrichtung der eingangs genannten Art, bei der erfindungsgemäß das Platinenrohr mindestens im Bereich seiner Anbindung an den Wischerantrieb einen T-förmigen Querschnitt aufweist. Das Platinenrohr ist somit gut geeignet, um direkt an dem Wischerantrieb befestigt zu werden. Ein Motorhalter kann also entfallen. Außerdem ist der T-förmige Querschnitt relativ kostengünstig herstellbar.

Der Wischerantrieb kann mit einer Nut zur Aufnahme des Platinenrohres im Bereich seines T-förmigen Querschnitts versehen sein. Dies erleichtert die Befestigung des Platinenrohres am Wischerantrieb. Das Platinenrohr muss folglich nur im Bereich seines T-förmigen Querschnitts in die im Wischerantrieb vorgesehene Nut eingeführt werden. Der Bereich mit dem T-förmigen Querschnitt ist formschlüssig in der Nut platziert. Durch den Formschluss ist ein Verdrehen des Platinenrohres relativ zum Wischerantrieb ausgeschlossen.

Für einen bequem vorzunehmenden Toleranzausgleich bei der Positionierung eines Wischergestänges während der Montage der Scheibenwischvorrichtung kann der Bereich mit dem T-förmigen Querschnitt innerhalb der Nut verschiebbar sein.

Die Befestigung des Platinenrohres am Wischerantrieb kann mittels Schrauben auf eine sehr einfache Weise geschehen.

Ein Teilbereich der Köpfe der Schrauben kann den Bereich mit dem T-förmigen Querschnitt teilweise überdecken. Folglich können die Schrauben in den Wischerantrieb eingeschraubt werden, wobei vor dem endgültigen Anziehen der Schrauben immer noch eine Verschiebung des Platinenrohres entlang seiner Längsachse zum Zwecke des Toleranzausgleiches möglich ist.

Alternativ oder zusätzlich ist es auch möglich, dass ein Halteblech den Bereich mit dem T-förmigen Querschnitt mindestens teilweise überdeckt. Auch diese Lösung ermöglicht vor der endgültigen Fixierung des Haltebleches die Verschiebung des Platinenrohres entlang seiner Längsachse, um Toleranzen auszugleichen.

Um die Montage des Platinenrohres zu erleichtern, kann das Platinenrohr im Bereich seines T-förmigen Querschnitts mindestens eine Ausnehmung aufweisen, in die ein auf dem Wischerantrieb angeordneter Vorsprung eingreift. Auf diese Weise ist dem Montagepersonal die genaue Einbaulage des Platinenrohres relativ zum Wischerantrieb vorgegeben. Das Montagepersonal muss dann nicht mehr das Platinenrohr entlang der Nut verschieben, um die optimale Einbaulage zu finden. Auf diese Weise kann mit der mindestens einen Ausnehmung und dem darin eingreifenden Vorsprung die Taktzeit reduziert werden.

Für eine zuverlässige Anbindung des Platinenrohres an Wischerlager, kann das Platinenrohr mindestens in einem an die Wischerlager angrenzenden Bereich einen runden Querschnitt aufweisen.

Der Wischerantrieb lässt sich optimal an einer Fahrzeugkarosserie befestigen, wenn er einen Stift zur Befestigung an der Fahrzeugkarosserie aufweist. Natürlich ist es auch möglich, den Stift an der Fahrzeugkarosserie vorzusehen und am Wischerantrieb eine entsprechende Bohrung.

### KURZE BESCHREIBUNG DER ZEICHNUNGEN

Nachfolgend werden Ausführungsbeispiele der erfindungsgemäßen Scheibenwischvorrichtung anhand der beiliegenden Zeichnungen näher erläutert.

Im Einzelnen zeigen:
- Fig. 1: eine perspektivische Ansicht eines Wischergestänges mit Wischerantrieb;
- Fig. 2: eine perspektivische Ansicht auf den Wischerantrieb und einen Teilbereich eines Platinenrohres;
- Fig. 3: eine perspektivische Ansicht auf den Wischerantrieb und den Teilbereich des Platinenrohres im montierten Zustand;
- Fig. 4: eine zweite Ausführungsform des Platinenrohres und des Wischerantriebes.

### AUSFÜHRUNGSFORMEN DER ERFINDUNG

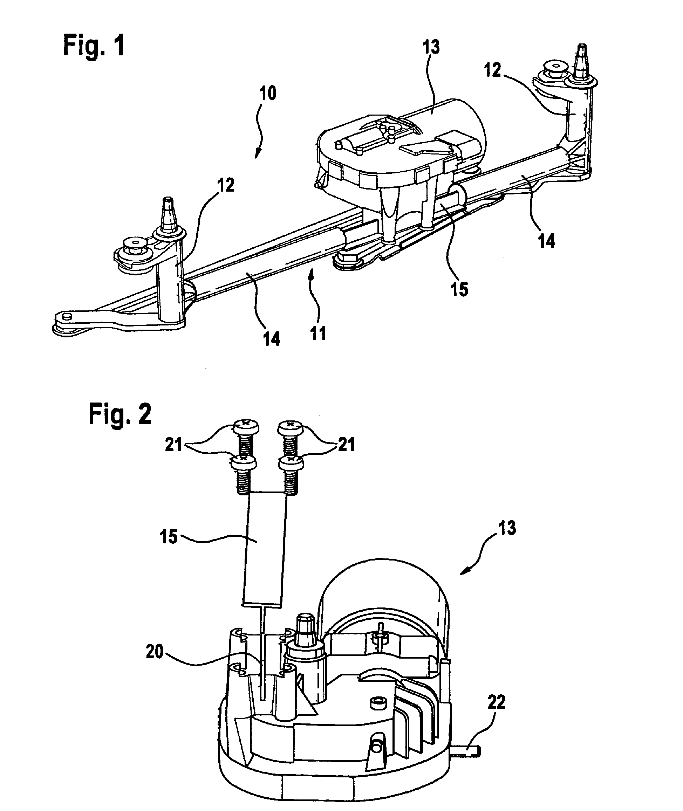

Fig. 1 zeigt ein Wischergestänge 10 mit einem Platinenrohr 11 und Wischerlagern 12. An dem Platinenrohr 11 ist ein Wischerantrieb 13 montiert.

Das Platinenrohr 11 weist in den Bereichen 14 seiner Anbindung an die Wischerlager 12 einen runden Querschnitt auf. Im Bereich 15, in welchem das Platinenrohr 11 an den Wischerantrieb 13 angebunden ist, weist es einen T-förmigen Querschnitt auf.

Der Wischerantrieb 13 ist mit einer Nut 20 versehen (siehe Fig. 2), in die das Platinenrohr 11 mit seinem den T-förmigen Querschnitt aufweisenden Bereich 15 einführbar ist. Das Platinenrohr 11 sitzt somit im Bereich 15 formschlüssig in der Nut 20. Durch den Formschluss ist ein Verdrehen des Platinenrohres 11 gegenüber dem Wischerantrieb 13 zuverlässig ausgeschlossen.

Der den T-förmigen Querschnitt aufweisende Bereich 15 kann innerhalb der Nut 20 verschoben werden, insbesondere entlang der Längsachse des Platinenrohres 11. Die Verschiebbarkeit des Bereiches 15 innerhalb der Nut 20 entlang der Längsachse des Platinenrohres 11 ist besonders beim Ausgleich von Toleranzen während der Montage des Wischergestänges 10 hilfreich.

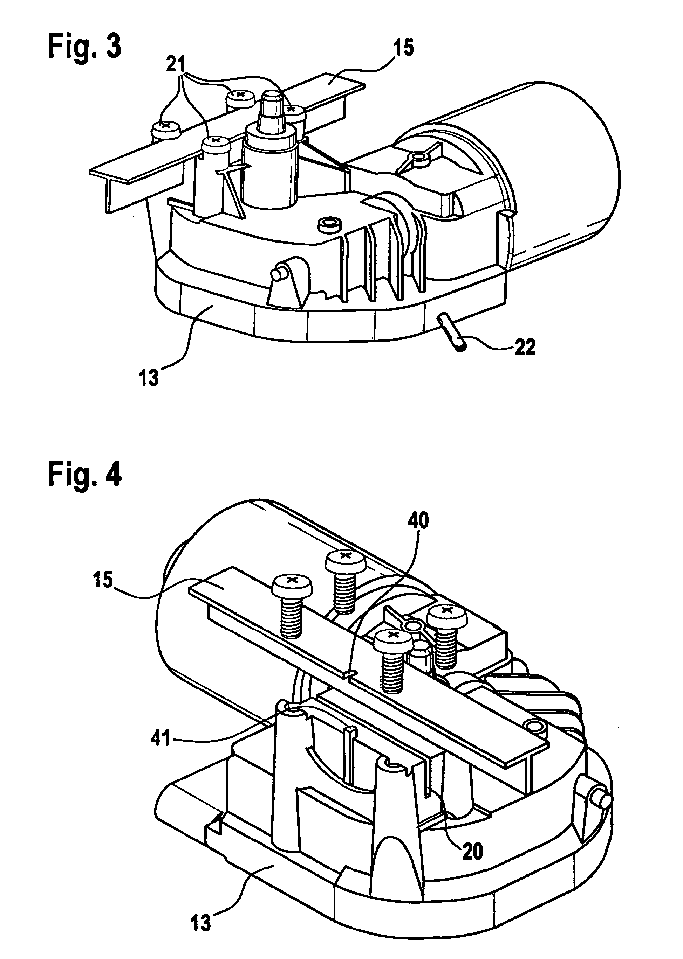

Das Platinenrohr 11 kann in dem den T-förmigen Querschnitt aufweisenden Bereich 15 mittels Schrauben 21 am Wischerantrieb 13 festgeschraubt werden. Ein Teilbereich der Köpfe der Schrauben 21 kann den Bereich 15 teilweise überdecken (siehe Fig. 3). Die Schrauben 21 werden also nicht in den Bereich 15 hinein geschraubt, sondern seitlich davon in den Wischerantrieb 13. Folglich kann das Platinenrohr 11 vor dem endgültigen Anziehen der Schrauben 21 entlang der Längsachse des Platinenrohres 11 verschoben werden, um Toleranzen auszugleichen.

Am Wischerantrieb 13 ist ein Stift 22 angeordnet (siehe Fign. 2 und 3), mit dem der Wischerantrieb 13 an einer hier nicht näher dargestellten Fahrzeugkarosserie befestigt werden kann.

In einer weiteren Ausführungsform kann der Bereich 15 mit einer Ausnehmung 40 versehen sein, in welche ein am Wischerantrieb 13 angeordneter Vorsprung 41 eingreifen kann. Durch die Ausnehmung 40 und den Vorsprung 41 ist einem Montagepersonal die genaue Einbaulage des Platinenrohres 11 relativ zum Wischerantrieb 13 vorgegeben. Diese einfache konstruktive Maßnahme hilft die Taktzeit bei der Montage zu reduzieren, da das Montagepersonal nicht mehr das Platinenrohr 11 entlang der Nut 20 verschieben muss, um die optimale Einbaulage zu finden.

## Patentansprüche

1. Scheibenwischvorrichtung, insbesondere für ein Kraftfahrzeug, mit einem an einem Wischerantrieb (13) angebundenen Platinenrohr (11), **dadurch gekennzeichnet, dass** das Platinenrohr (11) mindestens im Bereich (15) seiner Anbindung an den Wischerantrieb (13) einen T-förmigen Querschnitt aufweist.

2. Scheibenwischvorrichtung nach Anspruch 1, **dadurch gekennzeichnet, dass** der Wischerantrieb (13) mit einer Nut (20) zur Aufnahme des Platinenrohres (11) im Bereich (15) seines T-förmigen Querschnitts versehen ist.

3. Scheibenwischvorrichtung nach Anspruch 2, **dadurch gekennzeichnet, dass** der Bereich (15) mit dem T-förmigen Querschnitt innerhalb der Nut (20) verschiebbar ist.

4. Scheibenwischvorrichtung nach einem der Ansprüche 1 bis 3, **dadurch gekennzeichnet, dass** der Bereich (15) mit dem T-förmigen Querschnitt mittels Schrauben (21) am Wischerantrieb (13) fixierbar ist.

5. Scheibenwischvorrichtung nach Anspruch 4, **dadurch gekennzeichnet, dass** ein Teilbereich der Köpfe der Schrauben (21) den Bereich (15) mit dem T-förmigen Querschnitt teilweise überdeckt.

6. Scheibenwischvorrichtung nach Anspruch 4 oder 5, **dadurch gekennzeichnet, dass** ein Halteblech den T-förmigen Bereich (15) des Platinenrohres (11) mindestens teilweise überdeckt.

7. Scheibenwischvorrichtung nach einem der Ansprüche 1 bis 6, **dadurch gekennzeichnet, dass** das Platinenrohr (11) im Bereich (15) seines T-förmigen Querschnitts mindestens eine Ausnehmung (40) aufweist, in die ein auf dem Wischerantrieb angeordneter Vorsprung (41) eingreift.

8. Scheibenwischvorrichtung nach einem der Ansprüche 1 bis 7, **dadurch gekennzeichnet, dass** das Platinenrohr (11) mindestens in einem an Wischerlagern (12) angrenzenden Bereich (14) einen runden Querschnitt aufweist.

## Claims

1. Windscreen wiper device, in particular for a motor vehicle, with a tubular plate (11) which is connected to a wiper drive (13), **characterized in that** the tubular plate (11) has a T-shaped cross section at least in the region (15) of the connection thereof to the wiper drive (13).

2. Windscreen wiper device according to Claim 1, **characterized in that** the wiper drive (13) is provided with a groove (20) for receiving the tubular plate (11) in the region (15) of the T-shaped cross section thereof.

3. Windscreen wiper device according to Claim 2, **characterized in that** the region (15) having the T-shaped cross section is displaceable within the groove (20).

4. Windscreen wiper device according to one of Claims 1 to 3, **characterized in that** the region (15) having the T-shaped cross section is fixable to the wiper drive (13) by means of screws (21).

5. Windscreen wiper device according to Claim 4, **characterized in that** a partial region of the heads of the screws (21) partially covers the region (15) having the T-shaped cross section.

6. Windscreen wiper device according to Claim 4 or 5, **characterized in that** a retaining plate at least partially covers the T-shaped region (15) of the tubular plate (11).

7. Windscreen wiper device according to one of Claims 1 to 6, **characterized in that** the tubular plate (11) has, in the region (15) of the T-shaped cross section thereof, at least one recess (40) in which a projection (41) arranged on the wiper drive engages.

8. Windscreen wiper device according to one of Claims 1 to 7, **characterized in that** the tubular plate (11) has a round cross section at least in a region (14) adjacent to wiper bearings (12).

## Revendications

1. Dispositif d'essuie-glace, en particulier pour un véhicule automobile, comprenant un tube (11) de platine relié à un dispositif d'entraînement (13) d'essuie-glace, **caractérisé en ce que** le tube (11) de platine comporte une section transversale en forme de T au moins dans la région (15) de sa liaison au dispositif d'entraînement (13) d'essuie-glace.

2. Dispositif d'essuie-glace selon la revendication 1, **caractérisé en ce que** le dispositif d'entraînement (13) d'essuie-glace est muni d'une rainure (20) pour recevoir le tube (11) de platine dans la région (15) de sa section transversale en forme de T.

3. Dispositif d'essuie-glace selon la revendication 2, **caractérisé en ce que** la région (15) avec la section transversale en forme de T est déplaçable à l'intérieur de la rainure (20).

4. Dispositif d'essuie-glace selon l'une quelconque des revendications 1 à 3, **caractérisé en ce que** la région (15) avec la section transversale en forme de T peut être fixée au moyen de vis (21) sur le dispositif d'entraînement (13) d'essuie-glace.

5. Dispositif d'essuie-glace selon la revendication 4, **caractérisé en ce qu'**une région partielle des têtes des vis (21) recouvre en partie la région (15) avec la section transversale en forme de T.

6. Dispositif d'essuie-glace selon la revendication 4 ou 5, **caractérisé en ce qu'**une tôle de retenue recouvre au moins en partie la région (15) en forme de T du tube (11) de platine.

7. Dispositif d'essuie-glace selon l'une quelconque des revendications 1 à 6, **caractérisé en ce que** le tube (11) de platine comporte au moins un évidement (40) dans la région (15) de sa section transversale en forme de T, dans lequel évidement une saillie (41) disposée sur le dispositif d'entraînement d'essuie-glace vient en prise.

8. Dispositif d'essuie-glace selon l'une quelconque des revendications 1 à 7, **caractérisé en ce que** le tube (11) de platine comporte une section transversale ronde au moins dans une région (14) adjacente à des paliers (12) d'essuie-glace.
